# FASCICULE DE BREVET EUROPEEN

(11) **EP 2 456 275 B1**
(45) Date de publication et mention de la délivrance du brevet: **15.03.2017**
(21) Numéro de dépôt: 11189192.5
(22) Date de dépôt: 15.11.2011
(51) Int. Cl.: H04M 1/725, G06K 7/10, H04B 5/00

(54) **Dispositif de radiocommunication comprenant un lecteur d'étiquette UHF**
Funkvorrichtung, die einen UHF-Etikettenleser umfasst
Radiocommunication device comprising an UHF tag reader

(30) Priorité: 22.11.2010 FR 1004528
(43) Date de publication de la demande: 23.05.2012
(73) Titulaire: Inside Secure, 13590 Meyreuil (FR)
(72) Inventeur: Charrat, Bruno, 13090 AIX EN PROVENCE (FR); Cordier, Nicolas, 13080 LUYNES (FR)
(74) Mandataire: Marchand, André

(56) Documents cités:
- EP-A1- 1 585 233
- EP-A1- 2 034 705
- EP-A1- 2 230 774
- GB-A- 2 358 991
- US-A1- 2002 177 407

## Description

La technologie de communication à champ proche ou technologie "NFC" ("Near Field Communication") est aujourd'hui largement répandue et peut être embarquée dans tout type d'appareil portable. On réalise des composants NFC pouvant être configurés dans un mode de fonctionnement "lecteur" pour lire des étiquettes RFID ("Radio Frequency Identification tags") ou être configurés dans un mode "émulation de carte" où ils émulent une étiquette sans contact pour échanger des données avec un autre lecteur.

L'échange de données selon la technologie NFC s'effectue par couplage inductif entre une bobine d'antenne d'un lecteur et une bobine d'antenne de l'étiquette, par l'intermédiaire d'un champ magnétique alternatif émis par le lecteur, qui oscille généralement à la fréquence normalisée de 13,56 kHz. Les composants NFC de type lecteur requièrent des bobines d'antenne de grande taille, ce qui représente une contrainte pour leur intégration dans un téléphone mobile.

Parmi les diverses technologies d'étiquettes RFID, il existe une technique voisine de la technique NFC, basée sur le principe du couplage électrique de deux antennes UHF au lieu d'être basée sur le couplage inductif de deux bobines d'antenne RF. Cette technique est utilisée pour lire ou écrire des données dans des étiquettes RFID appelées "étiquettes UHF" ("UHF tags"). Les étiquettes UHF présentent une structure proche de celle des étiquettes NFC, mais utilisent une antenne UHF dont la taille est plus réduite que celle d'une bobine d'antenne NFC. A l'instar des étiquettes NFC, elles émettent généralement des données de manière passive en utilisant une technique de rétromodulation appelée "backscattering" qui consiste en une modulation du coefficient de réflexion de l'antenne de l'étiquette UHF. Enfin, comme les étiquettes NFC, les étiquettes UHF peuvent être purement passives et alimentées électriquement par le champ électrique émis par le lecteur.

Les étiquettes UHF présentent un prix de revient inférieur à celui des étiquettes NFC. A caractéristiques équivalentes (taille de la mémoire principalement), leur prix de revient est généralement deux à trois fois moindre. Cela est dû principalement au fait que la surface et l'épaisseur de l'antenne sont réduites, diminuant ainsi le besoin en matière première et permettant d'utiliser des processus de fabrication moins coûteux et augmentant la cadence des chaînes de fabrication.

Il a parfois été souhaité que les deux techniques de communication sans contact, NFC et UHF, puissent coexister. Par exemple, la demande WO 2004/034317 ou US 2005/0186904 décrit une étiquette NFC-UHF. La demande WO 2010/015753 décrit un convertisseur NFC/UHF permettant d'utiliser un lecteur NFC pour lire des étiquettes UHF.

Le document EP 1 585 233 décrit un téléphone équipé d'un émetteur radio GSM et d'une carte sans contact reliée au processeur du téléphone par l'intermédiaire d'une interface de communication. Sur détection de la présence d'un lecteur, la carte envoie au processeur du téléphone un signal d'interruption qui force celui-ci à interrompre une communication GSM.

Le document US 2002/0177407 décrit un téléphone équipé d'une part d'un émetteur radio GSM relié à une antenne UHF, et d'autre part un lecteur fonctionnant par couplage inductif relié à une bobine d'antenne inductive montée sur une carte. Le lecteur à couplage inductif utilise un champ magnétique RF généré par la bobine d'antenne comme support de communication, tandis que l'émetteur GSM utilise un champ électrique UHF.

Le document EP 2 230 774 décrit un coupleur inductif ou capacitif pour relier des ports de communication d'un contrôleur NFC et d'un processeur hôte. Chaque processeur peut être équipé de moyens de communication radio de type Bluetooth ou Wifi.

Du côté des lecteurs d'étiquettes UHF, l'émission d'un champ électrique dans la bande UHF (860 MHz - 960 MHz) permet également d'utiliser des antennes plus petites, qui sont donc plus facilement intégrables dans de petits appareils tels que les téléphones mobiles. A titre d'exemple, la société TagSense commercialise un lecteur UHF de petite dimension sous la référence "NANO-UHF RFID READER", destiné notamment à être intégré dans un téléphone mobile. Ce "nano-lecteur" opère à la fois aux fréquences UHF européennes (865-868 MHz) et aux fréquences UHF nord américaines (902-928 MHz). Il comprend un oscillateur, un contrôleur, un modulateur et un démodulateur. Le signal de rétromodulation est démodulé jusqu'à la bande de base à travers un étage mélangeur I/Q et est ensuite filtré et amplifié. Le signal démodulé est ensuite échantillonné et traité par le contrôleur. La connexion du nano-lecteur avec un processeur hôte est faite par l'intermédiaire d'un bus à trois fils.

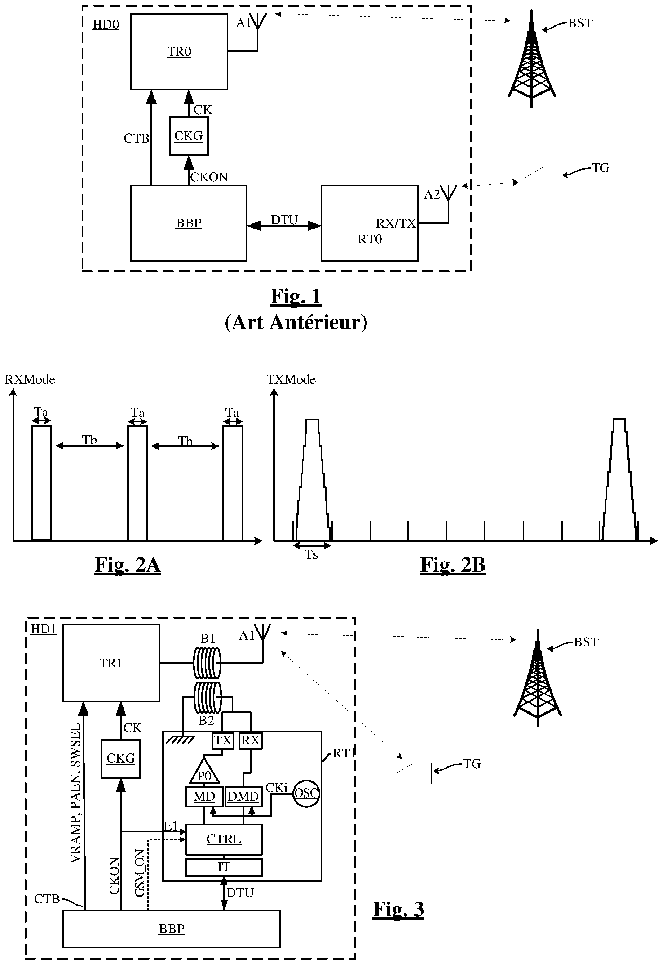

La figure 1 montre schématiquement un téléphone mobile HD0 équipé d'un lecteur RT0 d'étiquette UHF. Le téléphone HD0 comprend un processeur de bande de base BBP, un générateur d'horloge CKG et un émetteur-récepteur TR0. L'émetteur-récepteur TR0 est connecté à une première antenne A1 et le lecteur RT0 est connecté à une seconde antenne A2. Le processeur BBP est relié à l'émetteur-récepteur TR0 par l'intermédiaire d'un bus contrôle CTB et au lecteur RT0 par l'intermédiaire d'un bus de données DTU. Il contrôle le générateur d'horloge CKG au moyen d'un signal de marche/arrêt CKON.

Le processeur BBP utilise ainsi d'une part l'émetteur-récepteur TR0 pour établir une connexion à une station de base BST du réseau GSM, par l'intermédiaire de l'antenne A1, et d'autre part le lecteur UHF RT0 pour lire et/ou écrire des données dans une étiquette UHF TG, par l'intermédiaire de l'antenne A2.

L'intégration d'un lecteur UHF dans un téléphone mobile, bien qu'étant plus simple que l'intégration d'un lecteur NFC, présente néanmoins un certain coût. Il pourrait donc être souhaité de rationaliser cette intégration pour réduire encore plus le prix de revient d'un lecteur UHF.

Des modes de réalisation de l'invention concernent un dispositif comprenant un émetteur-récepteur radioélectrique équipé d'une antenne UHF, un générateur d'horloge associé à l'émetteur-récepteur radioélectrique, un processeur configuré pour se connecter à un réseau de radiotéléphonie périodiquement au moyen de l'émetteur-récepteur radioélectrique, et un lecteur d'étiquette UHF, dans lequel le lecteur d'étiquette UHF est configuré pour conduire une transaction avec une étiquette UHF uniquement en dehors de périodes de connexion du processeur au réseau de radiotéléphonie, lorsque l'émetteur-récepteur radioélectrique n'est pas en cours d'utilisation par le processeur pour une connexion au réseau de radiotéléphonie.

Selon un mode de réalisation, le lecteur d'étiquette UHF reçoit du processeur un signal d'activité indiquant si l'émetteur-récepteur radioélectrique est en cours d'utilisation pour une connexion au réseau de radiotéléphonie ou non.

Selon un mode de réalisation, le lecteur d'étiquette UHF comporte au moins une borne de réception de signaux UHF couplée à l'antenne UHF de l'émetteur-récepteur radioélectrique.

Selon un mode de réalisation, la borne de réception de signaux UHF du lecteur d'étiquette UHF est couplée inductivement, électriquement ou capacitivement à l'antenne UHF.

Selon un mode de réalisation, la borne de réception de signaux UHF du lecteur d'étiquette UHF est reliée à l'antenne UHF par l'intermédiaire d'un interrupteur.

Selon un mode de réalisation, la borne de réception de signaux UHF du lecteur d'étiquette UHF est directement connectée à l'antenne UHF.

Selon un mode de réalisation, le lecteur d'étiquette UHF comprend une entrée de signal d'horloge recevant un signal d'horloge fourni par le générateur d'horloge de l'émetteur-récepteur radioélectrique.

Selon un mode de réalisation, l'activation du générateur d'horloge de l'émetteur-récepteur radioélectrique est à la fois sous le contrôle du processeur et sous le contrôle du lecteur d'étiquette UHF.

Selon un mode de réalisation, le générateur d'horloge de l'émetteur-récepteur radioélectrique est activé par un premier signal d'activation fourni par le processeur et par un second signal d'activation fourni par le lecteur d'étiquette UHF.

Selon un mode de réalisation, le générateur d'horloge de l'émetteur-récepteur radioélectrique est activé par un second signal d'activation fourni par le lecteur d'étiquette UHF, le second signal d'activation étant asservi à un premier signal d'activation fourni par le processeur.

Selon un mode de réalisation, le lecteur d'étiquette UHF comporte au moins une borne d'émission de signaux UHF couplée à l'antenne UHF de l'émetteur-récepteur radioélectrique.

Selon un mode de réalisation, le lecteur d'étiquette UHF comporte au moins une borne de sortie reliée à une entrée du processeur et fournissant un signal de données destiné à une étiquette UHF, et le processeur est configuré pour émettre le signal de données par l'intermédiaire de l'émetteur-récepteur radioélectrique pour le compte du lecteur d'étiquette UHF, sous la forme d'un signal radio UHF modulé.

Selon un mode de réalisation, le lecteur d'étiquette UHF et le processeur sont configurés pour échanger des signaux de synchronisation préalablement à l'émission du signal de données, par l'intermédiaire de la borne de sortie reliée à l'entrée du processeur.

Selon un mode de réalisation, le lecteur d'étiquette UHF comporte au moins une borne de sortie reliée à une entrée de l'émetteur-récepteur radioélectrique et fournissant à l'émetteur-récepteur radioélectrique un signal modulé à émettre à l'attention d'une étiquette UHF.

Selon un mode de réalisation, l'entrée de l'émetteur-récepteur radioélectrique reliée à la sortie du lecteur d'étiquette UHF est reliée à l'antenne par l'intermédiaire d'un interrupteur commandé par le processeur.

Des modes de réalisation de téléphones mobiles selon l'invention seront décrits dans ce qui suit en se référant à titre non limitatif aux figures jointes, parmi lesquelles :
- la figure 1 précédemment décrite montre un téléphone mobile équipé d'un lecteur d'étiquette UHF,
- les figures 2A, 2B montrent des cycles d'activité radioélectrique d'un téléphone mobile,
- la figure 3 montre un premier mode de réalisation d'un téléphone mobile selon l'invention,
- la figure 4 montre un second mode de réalisation d'un téléphone mobile selon l'invention,
- la figure 5 montre un troisième mode de réalisation d'un téléphone mobile selon l'invention,
- la figure 6 montre une variante du téléphone mobile de la figure 5,
- la figure 7 montre l'architecture d'un lecteur d'étiquette UHF présent dans le téléphone de la figure 5 ou 6,
- la figure 8 montre un quatrième mode de réalisation d'un téléphone mobile selon l'invention,
- la figure 9 montre l'architecture d'un lecteur d'étiquette UHF présent dans le téléphone de la figure 8,
- la figure 10 montre l'architecture d'un émetteur-récepteur radioélectrique présent dans le téléphone de la figure 8,
- la figure 11 montre des chronogrammes de signaux illustrant le fonctionnement du téléphone de la figure 8,
- la figure 12 montre un cinquième mode de réalisation d'un téléphone mobile selon l'invention,
- la figure 13 montre l'architecture d'un lecteur d'étiquette UHF présent dans le téléphone de la figure 12, et
- la figure 14 montre un exemple d'architecture d'un émetteur-récepteur radioélectrique présent dans le téléphone de la figure 12.

Il est connu qu'un téléphone GSM présente des périodes d'activité où il émet des "rafales" ("bursts") de signaux radioélectriques, entrecoupées de périodes d'inactivité pendant lesquelles ses moyens de radiocommunication ne sont pas utilisés. Également, un téléphone est dans la plupart du temps dans un mode de "veille GSM" afin d'économiser sa batterie. Les échanges radio sont alors brefs et espacés dans le temps.

Des modes de réalisation de l'invention se fondent sur l'observation que les périodes de temps pendant lesquelles le téléphone n'a pas d'activité GSM sont suffisantes pour conduire une transaction avec une étiquette UHF. On entend par "transaction" toute activité en relation avec la lecture ou l'écriture d'une étiquette UHF, y compris le simple envoi d'un signal d'interrogation pour déterminer si une étiquette UHF se trouve dans le champ d'interrogation du lecteur.

A titre d'illustration, la figure 2A illustre l'activité d'un téléphone en mode veille GSM. On distingue des périodes d'écoute en mode réception (mode RX), de durée Ta, permettant au téléphone de recevoir des paquets de supervision, entrecoupées de périodes de durée Tb où les circuits de radiotéléphonie sont au repos. Le temps Ta est généralement court, par exemple de 577 microsecondes. Le temps Tb dépend de l'opérateur et est généralement compris entre 0,471 et 2,122 secondes. Ce temps est suffisant pour réaliser une transaction avec une étiquette UHF (à savoir l'envoi d'un signal d'interrogation, éventuellement suivi d'une lecture et/ou d'une écriture de l'étiquette).

La figure 2B illustre l'activité du téléphone en émission (Mode TX) pendant une communication téléphonique. Le téléphone se voit accorder un créneau temporel ("slot") dans une trame TDMA ("Time division multiple access") comprenant 8 ou 16 créneaux. La durée habituelle Ts d'un créneau temporel est de 577 microsecondes, pendant lequel le téléphone émet une rafale de signaux radioélectriques ("burst"). Avec une trame de 8 créneaux temporels, il s'écoule donc 7*577 microsecondes soit environ 4 millisecondes avant que le téléphone ne réémette un signal radio, ce qui est également suffisant pour réaliser une transaction simple avec une étiquette UHF, à savoir une transaction de type lecture sans écriture de données dans l'étiquette. A titre d'exemple, la durée d'une transaction de type "lecture d'un identifiant" est typiquement de l'ordre de la milliseconde avec une étiquette UHF.

Des modes de réalisation de l'invention concernent ainsi un téléphone mobile comprenant un lecteur d'étiquette UHF qui est configuré pour conduire une transaction avec une étiquette UHF lorsque les moyens de radiocommunication du téléphone sont au repos. Cette caractéristique permet de mettre à la disposition du lecteur d'étiquette UHF des ressources de radiotéléphonie du téléphone, par exemple pour simplifier l'architecture du lecteur et réduire son prix de revient. Une telle "mise à disposition" des ressources de radiotéléphonie peut comprendre tout ou partie des configurations suivantes :
- utilisation de l'antenne de l'émetteur-récepteur radio du téléphone en dehors des périodes d'activité GSM,
- utilisation d'un générateur de l'horloge radio du téléphone en dehors des périodes d'activité GSM, et
- utilisation de l'émetteur radio du téléphone en dehors des périodes d'activité GSM.

On décrira dans ce qui suit des modes de réalisation d'un téléphone mobile équipé d'un lecteur UHF qui utilise au moins un élément de l'équipement de radiocommunication du téléphone pour conduire une transaction avec une étiquette UHF en dehors des périodes d'activité GSM.

La figure 3 montre un téléphone mobile HD1 équipé d'un lecteur RT1 d'étiquette UHF. Le téléphone HD1 comprend un processeur de bande de base BBP et des moyens de radiocommunication comprenant un générateur d'horloge CKG et un émetteur-récepteur TR1 connecté à une antenne A1. L'émetteur-récepteur TR1 est par exemple un émetteur récepteur GSM quadri-bande (850, 900, 1800 ou 1900 MHz). Le générateur d'horloge CKG est par exemple de type VTCXO ("Voltage Controlled Temperature-Compensated Crystal Oscillator" ou Oscillateur à Cristal à Compensation de Température et à Contrôle en Tension) fournissant un signal d'horloge CK de 26 MHz à l'émetteur-récepteur TR1. Le téléphone HD1 comporte d'autres organes qui ne sont pas représentés dans un souci de simplicité, tels qu'un afficheur et un clavier, une batterie électrique, un microphone, un haut-parleur, etc.

Le processeur BBP est relié à l'émetteur-récepteur TR1 par l'intermédiaire d'un bus de contrôle CTB qui véhicule notamment des signaux de contrôle PAEN, VRAMP, SWSEL décrits plus loin. Le processeur BBP contrôle également le générateur d'horloge CKG au moyen d'un signal de marche/arrêt CKON. Ainsi, le processeur BBP utilise le générateur d'horloge CKG et l'émetteur-récepteur TR1 pour établir une connexion avec une station de base BST du réseau GSM.

Le lecteur RT1 présente une architecture de type classique et comprend par exemple un contrôleur CTRL, par exemple un microcontrôleur, un oscillateur haute fréquence OSC, un modulateur MD, un démodulateur DMD et une interface de communication IT reliée au processeur BBP par l'intermédiaire d'un bus de données DTU. L'oscillateur OSC fournit un signal d'horloge interne CKi au modulateur MD et au démodulateur DMD. Un oscillateur auxiliaire à faible coût, tel qu'un oscillateur en anneau, non représenté sur la figure 3, peut également être prévu pour fournir un signal d'horloge au contrôleur CTRL. Le modulateur MD a une entrée reliée au contrôleur CTRL et une sortie reliée à une borne de sortie TX du lecteur par l'intermédiaire d'un amplificateur radiofréquence P0. Le démodulateur DMD présente une entrée reliée à une borne d'entrée RX du lecteur et une sortie reliée au contrôleur CTRL.

Les bornes de sortie TX et d'entrée RX sont couplées à l'antenne A1 de l'émetteur-récepteur TR1. Le couplage est réalisé ici au moyen d'une première bobine B1 en série avec l'antenne A1, couplée inductivement à une seconde bobine B2 reliée à la borne d'entrée RX et à la borne de sortie TX du lecteur RT1. Dans une variante, ce couplage inductif est remplacé par un couplage électrique au moyen de microbandes (micro-strip), ou par un couplage capacitif. Le lecteur RT1 peut ainsi utiliser l'antenne A1 du téléphone pour dialoguer avec une étiquette UHF TG, et il n'est pas nécessaire de prévoir une seconde antenne dans le téléphone. De préférence, la circuiterie connectée aux bornes RX et TX du lecteur RT1, notamment sortie de l'amplificateur P0 et l'entrée du démodulateur DMD, est conçue de manière à présenter une haute impédance lorsque le téléphone a une activité GSM, afin de ne pas perturber le fonctionnement de l'émetteur-récepteur TR1.

En pratique, la mise en oeuvre d'applications UHF (lecture et/ou écriture d'étiquettes UHF) peut être faite de deux manières :
1) le processeur BBP gère les applications UHF et exécute donc lui-même les programmes conçus pour mettre en oeuvre ces applications ("programmes application"). Le lecteur RT1 est seulement utilisé comme un coupleur UHF, à savoir pour l'envoi à des étiquettes UHF de commandes fournies par le processeur BBP et pour la réception de données fournies par les étiquettes, qui sont ensuite fournies au processeur BBP pour traitement ;
2) le processeur BBP ne gère pas les applications UHF et celles-ci sont prises en charge par le lecteur RT1. Le contrôleur CTRL doit dans ce cas présenter une puissance de calcul et une mémoire-programme suffisantes pour accueillir et exécuter des programmes application.

Dans le premier cas, le processeur BBP n'active le lecteur RT1 qu'en dehors des périodes d'activité GSM, pour éviter les conflits de signaux électriques sur l'antenne A1.

Dans le second cas, illustré sur la figure 3, le lecteur RT1 comporte une entrée E1 (par exemple un port du contrôleur CTRL) recevant un signal lui permettant de savoir si le circuit de radiocommunication du téléphone (émetteur-récepteur TR1 et générateur d'horloge CKG) est actif ou au repos. Ce signal peut être un signal "GSM_ON" envoyé par le processeur BBP, comme représenté en traits pointillés, ou le signal de marche/arrêt CKON que le processeur BBP applique au générateur d'horloge CKG. Le lecteur RT1 est configuré pour surveiller le signal CKON et ne pas exécuter une application UHF lorsque le signal CKON est dans un état signifiant que le processeur BBP utilise le générateur d'horloge CKG.

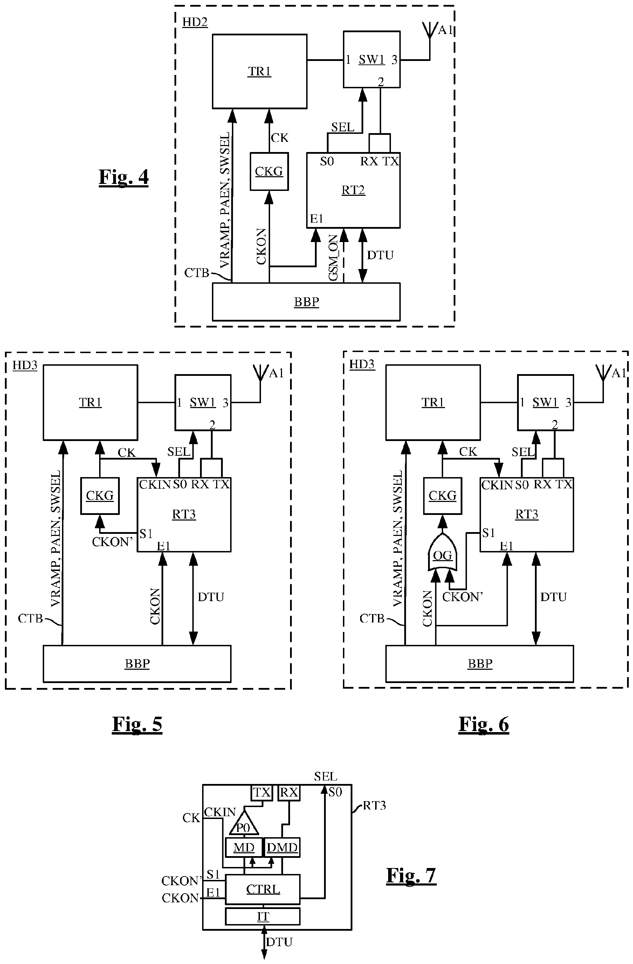

La figure 4 montre un téléphone portable HD2 selon l'invention équipé d'un lecteur RT2 d'étiquette UHF. Le lecteur RT2 se distingue du lecteur RT1 en ce qu'il comporte une sortie S0 fournissant un signal SEL. Le téléphone HD2 se distingue du téléphone HD1 en ce que les bobines de couplage B1, B2 sont remplacées par un interrupteur-multiplexeur SW1 piloté par le signal SEL. L'interrupteur SW1 comprend une entrée 1 reliée à la borne d'antenne de l'émetteur-récepteur TR1, une entrée 2 reliée aux bornes RX, TX du lecteur RT2, et une sortie reliée à l'antenne A1. Selon la valeur du signal SEL, l'entrée 1 est reliée à la sortie 3 ou l'entrée 2 est reliée à la sortie 3. Dans le premier cas, l'émetteur-récepteur TR1 est relié à l'antenne A1. Dans le second cas, les bornes TX et RX du lecteur RT2 sont reliées à l'antenne A1.

On suppose dans l'exemple de réalisation représenté sur la figure 4 que les applications UHF sont gérées par le lecteur RT2. Celui-ci reçoit comme précédemment, sur une entrée E1, le signal CKON (ou GSM_ON) lui permettant de savoir si l'antenne A1 est utilisée par le processeur BBP, afin de conférer au signal SEL la valeur appropriée.

Dans une variante où les applications UHF sont gérées par le processeur BBP, le signal SEL est fourni par le processeur BBP, qui contrôle alors lui-même l'interrupteur SW1.

La figure 5 montre un téléphone portable HD3 selon l'invention, équipé d'un lecteur RT3. La structure du lecteur RT3 est représentée plus en détail sur la figure 7. Le lecteur RT3 se distingue du lecteur RT1 (Cf. Fig. 3) en ce qu'il comporte :
- l'entrée E1 recevant le signal CKON et la sortie S0 fournissant le signal SEL, décrites plus haut en relation avec le lecteur RT2,
- une sortie S1 fournissant un signal CKON', formée par exemple par un port du contrôleur CTRL, et
- une entrée CKIN recevant le signal d'horloge CK fourni par le générateur d'horloge CKG.

Le signal CK reçu sur l'entrée CKIN est appliqué au modulateur MD et au démodulateur DMD et remplace le signal d'horloge CKi fourni par l'oscillateur interne OSC dans le lecteur RT1 (Cf. Fig. 3). L'oscillateur OSC est supprimé, pour simplifier l'architecture et réduire le prix de revient du lecteur RT3.

Le générateur d'horloge CKG est ici contrôlé par le signal CKON' et le signal CKON est appliqué sur l'entrée E1 du lecteur RT3. Le contrôleur CTRL gère le signal CKON' de manière transparente en ce qui concerne l'activation du générateur d'horloge CKG par le processeur BBP. Ainsi, lorsque le signal CKON présente une valeur correspondant à la mise en marche du générateur d'horloge CKG (valeur active), le signal CKON' est identique au signal CKON. Par contre, lorsque le signal CKON présente une valeur correspondant à la mise à l'arrêt du générateur d'horloge CKG (valeur inactive), le contrôleur CTRL peut à tout instant décider de mettre en marche le générateur d'horloge CKG pour conduire une transaction avec une étiquette UHF. Il est envisageable que le processeur BBP place le signal CKON à la valeur active pendant que le lecteur RT3 est en train de conduire ou d'initier une transaction. Dans ce cas, la priorité est donnée à l'activité GSM et le lecteur RT3 interrompt la transaction UHF tout en laissant le générateur d'horloge dans l'état activé.

Ainsi, les ressources de radiotéléphonie du téléphone mises ici à la disposition du lecteur RT3 sont l'antenne A1, via l'interrupteur SW1, et le générateur d'horloge CKG.

Dans une variante où les applications UHF sont gérées par le processeur BBP, le signal SEL peut être directement fourni par le processeur BBP, qui contrôle alors lui-même l'interrupteur SW1. De même, le signal CKON' n'est pas nécessaire et le générateur d'horloge CKG peut être directement contrôlé par le processeur BBP.

La figure 6 montre un schéma du téléphone HD3 qui est équivalent à celui de la figure 5 en ce qui concerne le contrôle du générateur d'horloge CKG. Les signaux CKON et CKON' sont combinés dans une porte OG de type OU dont la sortie est appliquée sur l'entrée de contrôle du générateur d'horloge CKG. Le générateur d'horloge CKG est activé lorsque le signal CKON ou le signal CKON' présente la valeur active. Dans ce cas, il n'est pas nécessaire que le signal CKON' recopie le signal CKON lorsque celui-ci présente la valeur active.

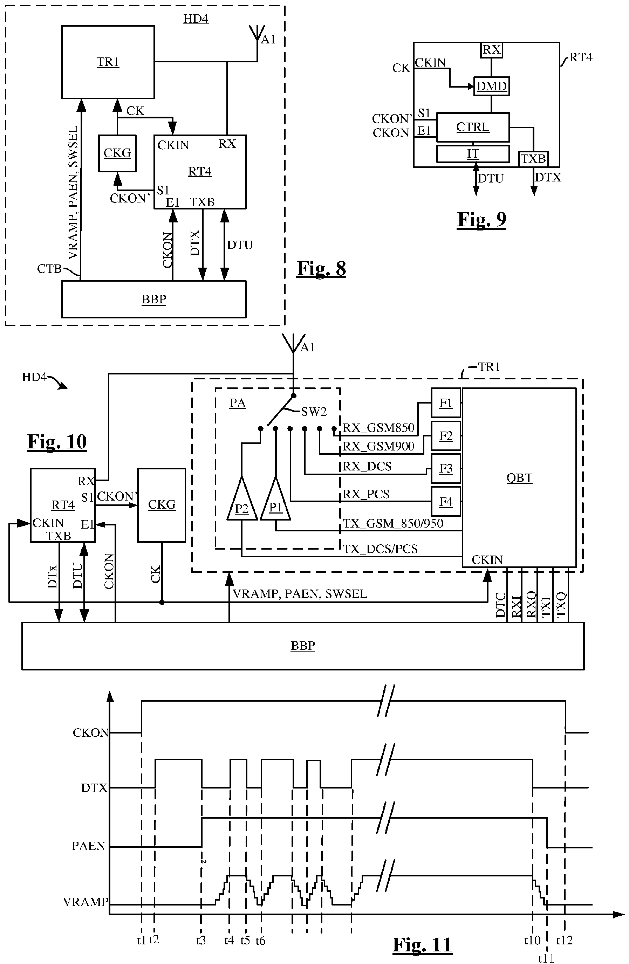

La figure 8 montre un téléphone portable HD4 équipé d'un lecteur RT4. La structure du lecteur RT4 est représentée plus en détail sur la figure 9. Le lecteur RT4 se distingue du lecteur RT3 en ce que la borne de sortie TX est supprimée ainsi que le modulateur MD et l'amplificateur haute fréquence P0. La borne de sortie TX est remplacée par une sortie en bande de base TXB, ici un port du contrôleur CTRL, qui fournit au processeur BBP un signal porteur de données DTX. Le lecteur RT4 se distingue également du lecteur RT3 en ce que la borne d'entrée RX est directement connectée à l'antenne A1, ainsi que la borne d'antenne de l'émetteur-récepteur TR1. La borne d'entrée RX présente de préférence une haute impédance afin de ne pas désadapter l'antenne A1 et ne pas réduire les performances de l'émetteur-récepteur TR1.

Ainsi, les moyens de radiotéléphonie du téléphone HD4 mis ici à la disposition du lecteur RT4 comprennent :
- l'antenne A1 et le générateur d'horloge CKG pour la réception de données envoyées par une étiquette UHF, lues via la borne RX,
- le processeur BBP, le générateur d'horloge CKG, l'émetteur-récepteur TR1 et l'antenne A1 pour émettre un champ électrique et moduler ce champ électrique en fonction du signal de données DTX.

La figure 10 montre un exemple de structure de l'émetteur-récepteur TR1. Celui-ci comprend un bloc émetteur-récepteur quadri-bande QBT ("Quad Band Transceiver") et un amplificateur de puissance PA. L'amplificateur de puissance PA comprend un interrupteur-multiplexeur SW2 et deux amplificateurs P1, P2. L'interrupteur SW2 présente une borne externe connectée à l'antenne A1 et six bornes internes, et connecte l'une des bornes internes à la borne externe en fonction de la valeur du signal SWSEL fourni par le processeur BBP.

Une première borne interne de l'interrupteur SW2, reliée à une entrée de l'émetteur-récepteur QBT par l'intermédiaire d'un filtre F1, est prévue pour recevoir un signal RX_GSM850 (signal modulé GSM de 850 MHz reçu d'une station de base). Une seconde borne interne, reliée à une entrée de l'émetteur-récepteur QBT par l'intermédiaire d'un filtre F2, est prévue pour recevoir un signal RX_GSM900 (signal modulé GSM de 900 MHz reçu d'une station de base). Une troisième borne interne, reliée à une entrée de l'émetteur-récepteur QBT par l'intermédiaire d'un filtre F3, est prévue pour recevoir un signal RX_DCS (signal modulé DCS 1800 MHz reçu d'une station de base). Une quatrième borne interne, reliée à une entrée de l'émetteur-récepteur QBT par l'intermédiaire d'un filtre F4, est prévue pour recevoir un signal RX_PCS (signal modulé DCS 1900 MHz reçu d'une station de base). Une cinquième borne interne est reliée à la sortie de l'amplificateur P1. L'entrée de cet amplificateur reçoit un signal TX_GSM_850/950 fourni par l'émetteur-récepteur QBT (signal modulé GSM 850 MHz ou GSM 900 MHz à envoyer à une station de base). Enfin, une sixième borne interne est reliée à la sortie de l'amplificateur P2. L'entrée de cet amplificateur reçoit un signal TX_DCS/PCS fourni par l'émetteur-récepteur QBT (signal modulé DCS 1800 MHz ou PCS 1900 MHz à envoyer à une station de base).

En sus du signal SWSEL, le processeur BBP applique à l'amplificateur de puissance PA les signaux PAEN et VRAMP mentionnés plus haut. Le signal PAEN est un signal d'activation de l'amplificateur de puissance PA et de sélection de l'un des amplificateurs P1, P2. Le signal VRAMP est un signal analogique de mise en forme de type "burst shaping", pour la mise en forme de rafales de signal électrique émises par l'amplificateur P1 au P2.

Par ailleurs, le processeur BBP applique au bloc émetteur-récepteur QBT des signaux différentiels TXI et TXQ véhiculant les données GSM I/Q à la fréquence de base et devant être envoyés à une station de base. En mode réception, l'émetteur-récepteur QBT envoie au processeur BBP des signaux différentiels RXI, RXQ véhiculant des données GSM I/Q. Enfin, l'émetteur-récepteur QBT reçoit le signal d'horloge CK fourni par le générateur d'horloge CKG.

Le fonctionnement du téléphone HD4 lors de l'envoi de données à une étiquette UHF est illustré sur la figure 11 par des chronogrammes représentant les signaux VRAMP, PAEN, DTX, CKON. On utilise ici la possibilité de moduler la puissance d'émission des amplificateurs P1 ou P2 au moyen du signal VRAMP pour émettre le signal DTX sous forme de signal radioélectrique. Plus particulièrement, l'amplificateur P1 est utilisé car il présente une bande passante compatible avec les fréquences de transaction UHF, tandis que l'amplificateur P2 est prévu pour les bandes hautes DCS 1800 MHz et PCS 1900 MHz. Par ailleurs, dans ce mode de réalisation, le signal DTX est également utilisé en tant que signal de "poignée de main" ("handshake signal") au moyen d'un système de contrôle de la ligne à drain ouvert ("open drain"), afin de permettre au lecteur RT4 d'échanger des signaux de synchronisation avec le processeur BBP.

A un instant t1, le téléphone quitte le mode de veille GSM et démarre l'oscillateur CKG en mettant le signal CKON à 1. L'émetteur-récepteur TR1 est placé dans le mode écoute en laissant le signal PAEN à 0, afin de recevoir un paquet de supervision envoyé par une station de base GSM. Étant donné que la radio GSM est activée, le lecteur RT4 sait qu'il peut réaliser une transaction UHF dès que la réception du paquet GSM sera terminée. Il le notifie au processeur BBP via le signal DTX qu'il relâche au niveau 1 à un instant t2. Le processeur BBP indique au lecteur RT4 la fin de l'activité GSM en tirant le signal DTX à 0 à un instant t3. Simultanément, le processeur BBP met en route l'amplificateur de puissance PA en mettant à 1 le signal PAEN. Le processeur BBP augmente ensuite progressivement la valeur du signal VRAMP appliqué à l'amplificateur de puissance. A un instant t4, le processeur BBP indique au lecteur RT4 que la radio est établie en relâchant le signal DTX, qui repasse à 1. A partir d'un instant t6, le lecteur RT4 envoie les données DTX au processeur BBP et ce dernier réalise une modulation d'amplitude du signal électrique appliqué à l'antenne A1 en utilisant le signal VRAMP. Après l'émission de données DTX, la transaction comprend une phase de réception de données via la borne RX du lecteur RT4, sans passer par l'émetteur-récepteur TR1. Pendant cette phase de réception, le signal DTX reste à 1 afin que l'émetteur-récepteur TR1 continue à émettre le champ électrique.

A un instant t10, la transaction UHF est terminée et le lecteur RT4 l'indique au processeur BBP en tirant le signal DTX à 0. A un instant t11, le processeur BBP désactive l'amplificateur de puissance PA en mettant le signal PAEN à 0. A un instant t12, il arrête le générateur d'horloge CKG en mettant le signal CKON à 0, ce qui entraîne également le passage à 0 du signal CKON' fourni par le lecteur RT4.

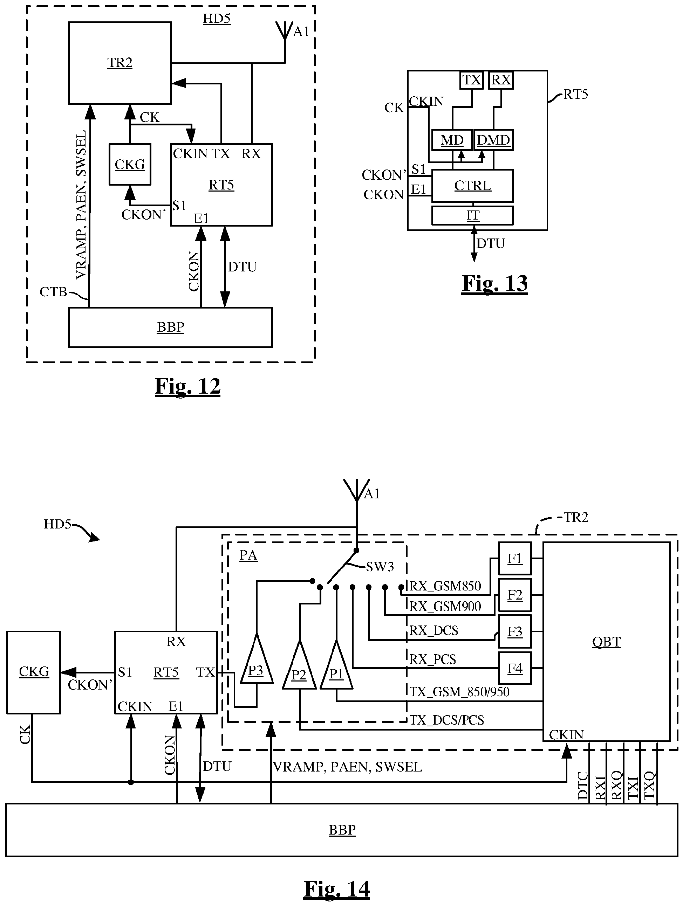

La figure 12 montre un téléphone portable HD5 équipé d'un lecteur RT5. La structure du lecteur RT5 est représentée plus en détail sur la figure 13. Le lecteur RT5 comporte le modulateur MD et le démodulateur DMD, qui reçoivent ici le signal d'horloge CK fourni par le générateur d'horloge CKG. Le démodulateur DMD est comme précédemment décrit connecté à la borne RX du lecteur, qui est directement connectée à l'antenne A1. Le modulateur MD est connecté à la borne TX du lecteur sans passer par l'amplificateur P0, qui est supprimé. La borne TX fournit ainsi un signal modulé qui n'est pas amplifié.

De façon complémentaire, le téléphone HD5 comporte un émetteur-récepteur TR2 dont la structure est représentée sur la figure 14. L'émetteur-récepteur TR2 se distingue de l'émetteur-récepteur TR1 en ce qu'il comporte un amplificateur de puissance supplémentaire P3 dont l'entrée est connectée à la sortie TX non amplifiée du lecteur RT5. L'émetteur-récepteur TR2 comporte également un interrupteur SW3 ayant 7 bornes internes au lieu de 6, la septième borne étant connectée à la sortie de l'amplificateur P3. L'interrupteur SW3 relie la sortie de l'amplificateur P3 à l'antenne A1 lorsque le processeur BBP fournit un signal de contrôle SWSEL approprié, sur demande du lecteur RT5.

Dans une variante de réalisation, l'émetteur-récepteur TR2 ne comporte pas l'amplificateur P3 et comprend un circuit de multiplexage agencé à l'entrée de l'amplificateur P1, qui permet de connecter la sortie TX du lecteur RT5 sur l'entrée de l'amplificateur P1.

Ainsi, les moyens de radiotéléphonie du téléphone HD5 mis ici à la disposition du lecteur RT5 comprennent :
- l'antenne A1 et le générateur d'horloge CKG pour la réception de données envoyées par une étiquette UHF,
- le générateur d'horloge CKG, l'émetteur-récepteur TR1 et l'antenne A1 pour émettre des données à une étiquette UHF.

Il apparaîtra clairement à l'homme de l'art qu'un téléphone mobile selon la présente invention est susceptible de divers autres modes de réalisation et applications, notamment par combinaison des diverses variantes de réalisation précédemment décrites.

Notamment, il apparaîtra clairement à l'homme de l'art que la caractéristique selon laquelle le lecteur d'étiquette UHF est configuré pour conduire une transaction avec une étiquette UHF uniquement en dehors de périodes de connexion du processeur au réseau GSM, et reçoit à cet effet du processeur un signal d'activité indiquant si l'émetteur-récepteur GSM est en cours d'utilisation pour une connexion au réseau GSM ou non, est susceptible de diverses applications autres que celle décrite plus haut, consistant à utiliser au moins un des organes de l'émetteur-récepteur GSM dans le fonctionnement du lecteur d'étiquette UHF. Cette caractéristique peut notamment être mise en oeuvre lorsque le lecteur d'étiquette n'utilise aucun organe de l'émetteur-récepteur GSM, afin d'éviter un phénomène d'interférence éventuel entre les signaux émis par le lecteur et ceux émis par l'émetteur-récepteur GSM lorsque ces deux éléments fonctionnement en même temps.

Par ailleurs, bien que l'on ait uniquement décrit dans ce qui précède les aspects d'un lecteur UHF se rapportant à la lecture ou l'écriture d'étiquettes UHF, il va de soi qu'un tel lecteur peut également comprendre des moyens de mise en oeuvre du mode émulation d'étiquette (appelé aussi émulation de carte). Comme ce mode de fonctionnement ne nécessite pas l'émission du champ électrique, de tels moyens d'émulation sont reliés à la borne RX du lecteur, en parallèle avec le démodulateur DMD.

La présente invention est par ailleurs susceptible d'être appliqué à tout type de dispositif équipé de moyen de radiotéléphonie pour le transport de la voix ou le transport de données, par exemple une carte modem 3G destinée à être insérée dans un ordinateur.

## Revendications

1. Dispositif (HD1-HD5) comprenant :
- un émetteur-récepteur radioélectrique (TR1, TR2) équipé d'une antenne UHF (A1),
- un générateur d'horloge (CKG) associé à l'émetteur-récepteur radioélectrique,
- un processeur (BBP) configuré pour se connecter à un réseau de radiotéléphonie (BST) périodiquement au moyen de l'émetteur-récepteur radioélectrique, et
- un lecteur d'étiquette UHF (RT1-RT5),
**caractérisé en ce que** le lecteur d'étiquette UHF (RT1, RT2, RT3, RT4, RT5) est configuré pour conduire une transaction avec une étiquette UHF (TG) uniquement en dehors de périodes de connexion du processeur (BBP) au réseau de radiotéléphonie, lorsque l'émetteur-récepteur radioélectrique n'est pas en cours d'utilisation par le processeur pour une connexion au réseau de radiotéléphonie.

2. Dispositif selon la revendication 1, dans lequel le lecteur d'étiquette UHF reçoit du processeur (BBP) un signal d'activité (GSM_ON, CKON) indiquant si l'émetteur-récepteur radioélectrique est en cours d'utilisation pour une connexion au réseau de radiotéléphonie ou non.

3. Dispositif selon l'une des revendications 1 et 2, dans lequel le lecteur d'étiquette UHF (RT1-RT5) comporte au moins une borne (RX) de réception de signaux UHF couplée à l'antenne UHF (A1) de l'émetteur-récepteur radioélectrique.

4. Dispositif (HD1) selon la revendication 3, dans lequel la borne (RX) de réception de signaux UHF du lecteur d'étiquette UHF (RT1) est couplée inductivement (B1, B2), électriquement ou capacitivement à l'antenne UHF (A1).

5. Dispositif (HD2, HD3) selon la revendication 3, dans lequel la borne (RX) de réception de signaux UHF du lecteur d'étiquette UHF (RT2, RT3) est reliée à l'antenne UHF (A1) par l'intermédiaire d'un interrupteur (SW1).

6. Dispositif (HD4, HD5) selon la revendication 3, dans lequel la borne (RX) de réception de signaux UHF du lecteur d'étiquette UHF (RT4, RT5) est directement connectée à l'antenne UHF (A1).

7. Dispositif (HD3, HD4, HD5) selon l'une des revendications 1 à 6, dans lequel le lecteur d'étiquette UHF (RT3, RT4, RT5) comprend une entrée de signal d'horloge (CKIN) recevant un signal d'horloge (CK) fourni par le générateur d'horloge (CKG) de l'émetteur-récepteur radioélectrique.

8. Dispositif selon la revendication 7, dans lequel l'activation du générateur d'horloge (CKG) de l'émetteur-récepteur radioélectrique est à la fois sous le contrôle (CKON) du processeur (BBP) et sous le contrôle (CKON') du lecteur d'étiquette UHF.

9. Dispositif selon la revendication 8, dans lequel le générateur d'horloge (CKG) de l'émetteur-récepteur radioélectrique est activé par un premier signal d'activation (CKON) fourni par le processeur (BBP) et par un second signal d'activation (CKON') fourni par le lecteur d'étiquette UHF.

10. Dispositif selon la revendication 8, dans lequel le générateur d'horloge (CKG) de l'émetteur-récepteur radioélectrique est activé par un second signal d'activation (CKON') fourni par le lecteur d'étiquette UHF, le second signal d'activation (CKON') étant asservi à un premier signal d'activation (CKON) fourni par le processeur (BBP).

11. Dispositif (HD1, HD2, HD3) selon l'une des revendications 1 à 10, dans lequel le lecteur d'étiquette UHF (RT1, RT2, RT3) comporte au moins une borne (TX) d'émission de signaux UHF couplée à l'antenne UHF de l'émetteur-récepteur radioélectrique.

12. Dispositif (HD4) selon l'une des revendications 1 à 10, dans lequel :
- le lecteur d'étiquette UHF (RT4) comporte au moins une borne de sortie (TXB) reliée à une entrée du processeur (BBP) et fournissant un signal de données (DTX) destiné à une étiquette UHF, et
- le processeur (BBP) est configuré pour émettre le signal de données (DTX) par l'intermédiaire de l'émetteur-récepteur radioélectrique pour le compte du lecteur d'étiquette UHF, sous la forme d'un signal radio UHF modulé.

13. Dispositif selon la revendication 12, dans lequel le lecteur d'étiquette UHF (RT4) et le processeur (BBP) sont configurés pour échanger des signaux de synchronisation préalablement à l'émission du signal de données, par l'intermédiaire de la borne de sortie (TXB) reliée à l'entrée du processeur (BBP).

14. Dispositif (HD5) selon l'une des revendications 1 à 10, dans lequel le lecteur d'étiquette UHF (RT5) comporte au moins une borne de sortie (TX) reliée à une entrée de l'émetteur-récepteur radioélectrique (TR2) et fournissant à l'émetteur-récepteur radioélectrique un signal modulé à émettre à l'attention d'une étiquette UHF.

15. Dispositif (HD5) selon la revendication 14, dans lequel l'entrée de l'émetteur-récepteur radioélectrique reliée à la sortie (TX) du lecteur d'étiquette UHF (RT5) est reliée à l'antenne (A1) par l'intermédiaire d'un interrupteur (SW2) commandé par le processeur (BBP).

## Patentansprüche

1. Vorrichtung (HD1-HD5) umfassend:
- einen Funksendeempfänger (TR1, TR2), der mit einer UHF-Antenne (A1) ausgestattet ist,
- einen Taktgenerator (CKG), der mit dem Funksendeempfänger assoziiert ist,
- einen Prozessor (BBP), der konfiguriert ist, um sich mit einem Mobilfunknetz (BST) periodisch anhand des Funksendeempfängers zu verbinden, und
- ein UHF-Tag-Lesegerät (RT1-RT5),
**dadurch gekennzeichnet, dass** das UHF-Tag-Lesegerät (RT1, RT2, RT3, RT4, RT5) konfiguriert ist, um eine Transaktion mit einem UHF-Tag (TG) nur außerhalb von Verbindungsperioden des Prozessors (BBP) mit dem Mobilfunknetz durchzuführen, während der Funksendeempfänger nicht vom Prozessor für eine Verbindung mit dem Mobilfunknetz verwendet wird.

2. Vorrichtung nach Anspruch 1, bei der das UHF-Tag-Lesegerät vom Prozessor (BBP) ein Aktivitätssignal (GSM_ON, CKON) empfängt, das darauf hinweist, ob der Funksendeempfänger dabei ist, für eine Verbindung mit dem Mobilfunknetz verwendet zu werden oder nicht.

3. Vorrichtung nach einem der Ansprüche 1 und 2, bei der das UHF-Tag-Lesegerät (RT1-RT5) mindestens einen Anschluss (RX) zum Empfang von UHF-Signalen aufweist, der mit der UHF-Antenne (A1) des Funksendeempfängers gekoppelt ist.

4. Vorrichtung (HD1) nach Anspruch 3, bei der der Anschluss (RX) zum Empfang von UHF-Signalen des UHF-Tag-Lesegeräts (RT1) induktiv (B1, B2), elektrisch oder kapazitiv mit der UHF-Antenne (A1) gekoppelt ist.

5. Vorrichtung (HD2, HD3) nach Anspruch 3, bei der der Anschluss (RX) zum Empfang von UHF-Signalen des UHF-Tag-Lesegeräts (RT2, RT3) mit der UHF-Antenne (A1) über einen Schalter (SW1) verbunden ist.

6. Vorrichtung (HD4, HD5) nach Anspruch 3, bei der der Anschluss (RX) zum Empfang von UHF-Signalen des UHF-Tag-Lesegeräts (RT4, RT5) unmittelbar mit der UHF-Antenne (A1) verbunden ist.

7. Vorrichtung (HD3, HD4, HD5) nach einem der Ansprüche 1 bis 6, bei der das UHF-Tag-Lesegerät (RT3, RT4, RT5) einen Taktsignaleingang (CKIN) umfasst, der ein vom Taktgenerator (CKG) des Funksendeempfängers geliefertes Taktsignal (CK) empfängt.

8. Vorrichtung nach Anspruch 7, bei der der Taktgenerator (CKG) des Funksendeempfängers gleichzeitig unter der Steuerung (CKON) des Prozessors (BBP) und unter der Steuerung (CKON') des UHF-Tag-Lesegeräts aktiviert wird.

9. Vorrichtung nach Anspruch 8, bei der der Taktgenerator (CKG) des Funksendeempfängers durch ein erstes vom Prozessor (BBP) geliefertes Aktivierungssignal (CKON) und durch ein zweites vom UHF-Tag-Lesegerät geliefertes Aktivierungssignal (CKON') aktiviert wird.

10. Vorrichtung nach Anspruch 8, bei der der Taktgenerator (CKG) des Funksendeempfängers durch ein zweites vom UHF-Tag-Lesegerät geliefertes Aktivierungssignal (CKON') aktiviert wird, wobei das zweite Aktivierungssignal (CKON') von einem ersten vom Prozessor (BBP) gelieferten Aktivierungssignal (CKON) angesteuert wird.

11. Vorrichtung (HD1, HD2, HD3) nach einem der Ansprüche 1 bis 10, bei der das UHF-Tag-Lesegerät (RT1, RT2, RT3) mindestens einen Anschluss (TX) zum Senden von UHF-Signalen aufweist, der mit der UHF-Antenne des Funksendeempfängers gekoppelt ist.

12. Vorrichtung (HD4) nach einem der Ansprüche 1 bis 10, bei der:
- das UHF-Tag-Lesegerät (RT4) mindestens einen Ausgangsanschluss (TXB) aufweist, der mit einem Eingang des Prozessors (BBP) verbunden ist und der ein für ein UHF-Tag bestimmtes Datensignal (DTX) liefert, und
- der Prozessor (BBP) konfiguriert ist, um das Datensignal (DTX) für das UHF-Tag-Lesegerät in Form von einem modulierten UHF-Funksignal über den Funksendeempfänger zu senden.

13. Vorrichtung nach Anspruch 12, bei der das UHF-Tag-Lesegerät (RT4) und der Prozessor (BBP) konfiguriert sind, um vor dem Senden des Datensignals Synchronisierungssignale über den mit dem Eingang des Prozessors (BBP) verbundenen Ausgangsanschluss (TXB) auszutauschen.

14. Vorrichtung (HD5) nach einem der Ansprüche 1 bis 10, bei der das UHF-Tag-Lesegerät (RT5) mindestens einen Ausgangsanschluss (TX) aufweist, der mit einem Eingang des Funksendeempfängers (TR2) verbunden ist und der dem Funksendeempfänger ein moduliertes an ein UHF-Tag zu sendendes Signal liefert.

15. Vorrichtung (HD5) nach Anspruch 14, bei der der mit dem Ausgang (TX) des UHF-Tag-Lesegeräts (RT5) verbundenen Funksendeempfängereingang über einen vom Prozessor (BBP) gesteuerten Schalter (SW2) mit der Antenne (A1) verbunden ist.

## Claims

1. A device (HD1-HD5) comprising:
- a radio transceiver (TR1, TR2) equipped with a UHF antenna (A1),
- a clock generator (CKG) associated with the radio transceiver,
- a processor (BBP) configured to periodically connect to a radiotelephony network (BST) by means of the radio transceiver, and
- a UHF tag reader (RT1-RT5),
**characterized in that** the UHF tag reader (RT1, RT2, RT3, RT4, RT5) is configured to conduct a transaction with a UHF tag (TG) only outside periods of connection of the processor (BBP) to the radiotelephony network, when the radio transceiver is not being used by the processor for a connection to the radio-communications network.

2. Device according to claim 1, wherein the UHF tag reader receives an activity signal (GSM_ON, CKON) from the processor (BBP) indicating whether or not the radio transceiver is being used for a connection to the radio-communications network.

3. Device according to one of claims 1 and 2, wherein the UHF tag reader (RT1-RT5) comprises at least one UHF signal receiving terminal (RX) coupled to the UHF antenna (A1) of the radio transceiver.

4. Device (HD1) according to claim 3, wherein the UHF signal receiving terminal (RX) of the UHF tag reader (RT1) is coupled inductively (B1, B2), electrically or capacitively to the UHF antenna (A1).

5. Device (HD2, HD3) according to claim 3, wherein the UHF signal receiving terminal (RX) of the UHF tag reader (RT2, RT3) is linked to the UHF antenna (A1) through a switch (SW1).

6. Device (HD4, HD5) according to claim 3, wherein the UHF signal receiving terminal (RX) of the UHF tag reader (RT4, RT5) is directly connected to the UHF antenna (A1).

7. Device (HD3, HD4, HD5) according to one of claims 1 to 6, wherein the UHF tag reader (RT3, RT4, RT5) comprises a clock signal input (CKIN) receiving a clock signal (CK) supplied by the clock generator (CKG) of the radio transceiver.

8. Device according to claim 7, wherein the activation of the clock generator (CKG) of the radio transceiver is both controlled (CKON) by the processor (BBP) and controlled (CKON') by the UHF tag reader.

9. Device according to claim 8, wherein the clock generator (CKG) of the radio transceiver is activated by a first activation signal (CKON) supplied by the processor (BBP) and by a second activation signal (CKON') supplied by the UHF tag reader.

10. Device according to claim 8, wherein the clock generator (CKG) of the radio transceiver is activated by a second activation signal (CKON') supplied by the UHF tag reader, the second activation signal (CKON') being slaved to a first activation signal (CKON) supplied by the processor (BBP).

11. Device (HD1, HD2, HD3) according to one of claims 1 to 10, wherein the UHF tag reader (RT1, RT2, RT3) comprises at least one UHF signal transmitting terminal (TX) coupled to the UHF antenna of the radio transceiver.

12. A device (HD4) according to one of claims 1 to 10, wherein:
- the UHF tag reader (RT4) comprises at least one output terminal (TXB) linked to an input of the processor (BBP) and supplying a data signal (DTX) intended for a UHF tag, and
- the processor (BBP) is configured to transmit the data signal (DTX) through the radio transceiver on behalf of the UHF tag reader, in the form of a modulated UHF radio signal.

13. Device according to claim 12, wherein the UHF tag reader (RT4) and the processor (BBP) are configured to exchange synchronization signals prior to transmitting the data signal, through the output terminal (TXB) linked to the input of the processor (BBP).

14. Device (HD5) according to one of claims 1 to 10, wherein the UHF tag reader (RT5) comprises at least one output terminal (TX) linked to an input of the radio transceiver (TR2) and supplying the radio transceiver with a modulated signal to be transmitted to a UHF tag.

15. Device (HD5) according to claim 14, wherein the input of the radio transceiver linked to the output (TX) of the UHF tag reader (RT5) is linked to the antenna (A1) through a switch (SW2) controlled by the processor (BBP).
